# EUROPÄISCHE PATENTSCHRIFT

(11) **EP 2 878 970 B1**
(45) Veröffentlichungstag und Bekanntmachung des Hinweises auf die Patenterteilung: **24.08.2016**
(21) Anmeldenummer: 14193006.5
(22) Anmeldetag: 13.11.2014
(51) Int. Cl.: G01S 7/486, G01S 7/497

(54) **Abtastende optoelektronische Detektionseinrichtung und Verfahren zum Betreiben einer solchen Detektionseinrichtung sowie Kraftfahrzeug mit einer solchen Detektionseinrichtung**
Scanning optoelectronic detection device and method for operating such a detection device, and motor vehicle having such a detection device
Dispositif de détection optoélectronique à balayage et procédé de fonctionnement d'un tel dispositif de détection et véhicule automobile doté d'un tel dispositif de détection

(30) Priorität: 27.11.2013 DE 102013019782
(43) Veröffentlichungstag der Anmeldung: 03.06.2015
(73) Patentinhaber: Valeo Schalter und Sensoren GmbH, 74321 Bietigheim-Bissingen (DE)
(72) Erfinder: Nies, Jürgen, 74321 Bietigheim-Bissingen (DE); Schenk, Jochen, 74321 Bietigheim-Bissingen (DE)

(56) Entgegenhaltungen:
- DE-A1-102010 047 984
- US-A- 5 638 163
- US-A1- 2011 307 206

## Beschreibung

Die Erfindung betrifft eine abtastende optoelektronische Detektionseinrichtung, insbesondere einen Laserscanner, gemäß Anspruch 1. Die Erfindung betrifft außerdem ein Verfahren zum Betreiben einer abtastenden optoelektronischen Detektionseinrichtung gemäß Anspruch 10 sowie gemäß Anspruch 16 ein Kraftfahrzeug mit einer solchen Detektionseinrichtung.

Im Automobilbereich werden zunehmend unterschiedliche Fahrerassistenzsysteme eingesetzt, das heißt elektronische Zusatzeinrichtungen zur Unterstützungen des Fahrers in bestimmten Fahrsituationen. Laser-basierte Systeme, auch unter der Bezeichnung "Lidar" ("Light detection and ranging") bekannt, dienen der optischen Abstands- und Geschwindigkeitsmessung und ermöglichen die Erkennung von Objekten in einer relativ großen Reichweite bis 200 m Entfernung vom Fahrzeug mit einer sehr hohen Messgenauigkeit. Die Detektionseinrichtung, beispielsweise ein Laserscanner, wird beispielsweise im vorderen Bereich des Fahrzeugs platziert, wie etwa hinter der Windschutzscheibe oder am Kühlergrill, um unter anderem die Zeit bis zum Aufprall (TTC = "Time to Collision") zu ermitteln. Solche Systeme können aber auch im seitlichen Bereich des Fahrzeugs platziert werden, um insbesondere den Totwinkel des Kraftfahrzeugs zu überwachen.

Ein Laserscanner arbeitet nach dem Lichtlaufzeitprinzip, wobei ein Sender elektromagnetische Strahlen (Laserpulse) innerhalb eines Abtastwinkelbereichs in die Umgebung des Kraftfahrzeugs sendet. Ein optischer Empfänger weist wenigstens einen Fotodetektor zum Empfangen von reflektierten Strahlen und zum Bereitstellen eines elektrischen Empfangssignals abhängig von den reflektierten Strahlen auf.

DE 10 2010 047 984 A1 offenbart einen Laserscanner mit einem Laser als optischen Sender sowie einer Spiegeleinheit, welche mit einem, dem Sender zugeordneten, Sendespiegel die ausgesendeten Strahlen auf die zu vermessende Szene umlenkt. Der bekannte Laserscanner weist außerdem einen Empfangsspiegel auf, welcher die von Zielobjekten im Abtastwinkelbereich reflektierten Strahlen auf den Empfänger umlenkt. Der bekannte Laserscanner umfasst einen Laser als optischen Sender und eine Spiegeleinheit welche mit einem, dem Sender zugeordneten, Sendespiegel die ausgesendeten Strahlen auf die zu vermessende Szene umlenkt. Ein dem Empfänger zugeordneter Empfangsspiegel lenkt die von Zielobjekten reflektierten Strahlen auf den Empfänger um. Der Sendespiegel und der Empfangsspiegel sind um eine gemeinsame Rotationsachse drehbar, welche von einer Antriebseinheit angetrieben wird.

Die ausgesendeten elektromagnetischen Strahlen (kurze Laserimpulse) werden über einen schwenkbaren Spiegel so abgelenkt, dass eine Abtastung des gesamten Sichtfelds innerhalb des Abtastwinkelbereichs stattfindet. Die Sendestrahlen innerhalb des Abtastwinkelbereichs werden zeitlich innerhalb eines Messzyklus des Laserscanners gesendet, wobei nach jedem Messzyklus jeweils eine Sendepause folgt. Während der Sendepausen werden keine Sendestrahlen in die Umgebung abgegeben. Werden pro Abtastwinkel jeweils ein Laserimpuls ausgesendet, so können im selben Winkelschritt reflektierte Strahlen mittels des optischen Empfängers empfangen und ein entsprechendes elektrisches Empfangssignal bereitgestellt werden. Erkennt eine Auswertungseinrichtung Echos, beziehungsweise Pulse, im Empfangssignal, so sind diese grundsätzlich auf Reflektionen der ausgesendeten Strahlen an Zielobjekten in der Umgebung zurückzuführen. Die Laufzeit zwischen dem Aussenden und dem Empfangen des Echos ist proportional zur Distanz zum Objekt. Aus der Laufzeitmessung wird die Entfernung zum betreffenden Objekt ermittelt.

Das Empfangssignal des Fotodetektors wird üblicherweise von einem Verstärker, beispielsweise einem Transimpedanzverstärker, verstärkt und anschließend der Auswertungseinrichtung zur Verfügung gestellt. Zur Deckung seines Energiebedarfs weist ein Laserscanner eine Spannungsversorgungseinrichtung zum Bereitstellen einer elektrischen Versorgungsspannung auf. Die relativ hohe Stromaufnahme des gesamten Empfängers führt regelmäßig zu einer erhöhten Aufheizung des gesamten Laserscanners, wodurch es bei hohen Umgebungstemperaturen zu einer Einschränkung des Einsatzbereichs in Kraftfahrzeugen kommen kann. Daher müssen regelmäßig Maßnahmen zur Kühlung des Laserscanners getroffen werden. Auf der anderen Seite kann jedoch eine zu niedrige Temperatur, insbesondere des Fotodetektors, beispielsweise durch die getroffenen Kühlmaßnahmen oder der niedrigen Umgebungstemperaturen, die Empfindlichkeit des Fotodetektors und damit die Messgenauigkeit des Laserscanners wesentlich verschlechtern.

Der vorliegenden Erfindung liegt die Aufgabe zu Grunde, eine Detektionseinrichtung und ein Verfahren zum Betreiben einer solchen Detektionseinrichtung zu schaffen, welche insbesondere bei Kraftfahrzeugen und verschiedenen Umgebungstemperaturen möglichst geringen Energiebedarf der Detektionseinrichtung bei größtmöglicher Empfindlichkeit ermöglichen.

Diese Aufgabe wird erfindungsgemäß durch eine Detektionseinrichtung mit den Merkmalen des Anspruchs 1 gelöst. Die Aufgabe wird außerdem durch ein Verfahren zum Betreiben einer solchen Detektionseinrichtung mit den Merkmalen des Anspruchs 10 gelöst. Ferner löst die Erfindung die Aufgabe gemäß Anspruch 16 durch ein Kraftfahrzeug mit einer solchen Detektionseinrichtung.

Die Erfindung beruht auf der Erkenntnis, dass der Empfänger und insbesondere die niederohmig ausgeführten Verstärker nur zeitweise in Betrieb des Laserscanners benötigt werden, nämlich während der Messzyklen, wenn die Sendestrahlen ausgesendet werden. Wird der Empfänger nicht benötigt, beziehungsweise keine Messung durchgeführt, so werden in einem Abschaltbetriebsmodus eine oder mehrere Komponenten des Empfängers von der Versorgungsspannung zeitweise getrennt und durch die Abschaltung des Empfängers elektrische Energie gespart.

Durch den verringerten Energiebedarf wird zudem die Wärmeerzeugung des Empfängers reduziert, so dass die Detektionseinrichtung auch bei hohen Umgebungstemperaturen im Kraftfahrzeug zuverlässig betrieben werden kann. Um bei niedrigen Umgebungstemperaturen und insbesondere in der Startphase der Detektionseinrichtung, wenn die Komponenten noch wenig warm sind, möglichst rasch die optimale Temperatur für höchste Empfindlichkeit der Fotodetektoren zu erreichen, ist erfindungsgemäß eine Steuereinrichtung vorgesehen, welche auf das Abschaltmittel zur zeitweisen elektrischen Trennung von der Versorgungseinrichtung unter Berücksichtigung der Ist-Temperatur einer Komponente der Detektionseinrichtung und unter Berücksichtigung einer vorgegebenen Soll-Temperatur wirkt. Die Steuereinrichtung berücksichtigt dabei die Ist-Temperatur in einer derartigen Weise, dass der Wert der erfassten Ist-Temperatur bei der Entscheidung über die zeitweise Abschaltung der elektrischen Versorgung im Abschaltbetriebsmodus maßgeblich ist.

Die vorgegebene Soll-Temperatur ist dabei vorzugsweise die optimale Betriebstemperatur der Komponente der Detektionseinrichtung, bei der die Ist-Temperatur erfasst wird. Vorzugsweise ist die von der Steuereinrichtung berücksichtigte Ist-Temperatur die Temperatur des wenigstens einen Fotodetektors. Der Fotodetektor umfasst eine oder mehrere Empfangsdioden, nämlich insbesondere Avalanche-Fotodioden, welche eine starke Temperaturabhängigkeit bezüglich ihrer Empfindlichkeit besitzen. Die optimale Empfindlichkeit erreicht die Avalanche-Fotodiode bei Vorliegen ihrer spezifischen Betriebstemperatur. Durch die erfindungsgemäße Berücksichtigung der Ist-Temperatur bei der Wirkung auf die elektrische Abschaltung der Empfängerkomponente kann in der Startphase nach Inbetriebnahme des Kraftfahrzeugs, das heißt bei noch kalten Elementen der Detektionseinrichtung, und insbesondere bei niedrigen Umgebungstemperaturen, sehr rasch die optimale Betriebstemperatur der Fotodioden erreicht werden, indem die zeitweise Abschaltung des Empfängers, das heißt die zeitweise elektrische Trennung zumindest einer Komponente des Empfängers, von der Ist-Temperatur abhängig gemacht ist.

Die optimale Empfindlichkeit des Empfängers ist gewährleistet, wenn die Detektionseinrichtung im Abschaltbetriebsmodus betrieben wird, sobald die Ist-Temperatur eine vorgegebene Soll-Temperatur erreicht oder überschreitet. Auf diese Weise wird schnellstmöglich die vorgegebene Soll-Temperatur während der Startphase erreicht. Vorteilhaft wird dabei die Ist-Temperatur der Fotodioden erfasst und der Steuereinrichtung zum Vergleich mit der vorgegebenen Soll-Temperatur erfasst.

In einer vorteilhaften Ausgestaltung der Erfindung ist der Steuereinrichtung ein Temperatursensor zur Erfassung der Ist-Temperatur einer Komponente der Detektionseinrichtung, nämlich beispielsweise des wenigstens einen Fotodetektors, zugeordnet. Der Temperatursensor kann dabei einer mit Fotodioden bestückten Platine des Fotodetektor zugeordnet sein.

Im Abschaltbetriebsmodus ist vorteilhaft der Steuereinrichtung für das Abschaltmittel die Dauer und/oder ein Anfangszeitpunkt des Abschaltintervalls vorgegeben, wobei durch die zeitweise Abschaltung des Empfängers der Detektionseinrichtung Energie eingespart werden kann. Vorteilhaft wird die Dauer des Abschaltintervalls variabel eingestellt, wobei die Ist-Temperatur mit der Dauer des Abschaltintervalls als Stellgröße gesteuert oder geregelt wird. Auf diese Weise kann unabhängig von der Umgebungstemperatur die optimale Betriebstemperatur durch den ständigen Vergleich beziehungsweise Angleich der Ist-Temperatur an die vorgegebene Soll-Temperatur sichergestellt werden. Die Berücksichtigung der Soll-Temperatur und Vergleich der Soll-Temperatur mit der Ist-Temperatur sichert zum einen während der Startphase einen ständigen elektrischen Betrieb des Empfängers, so dass die größtmögliche Wärmemenge abgegeben wird und rasch die Betriebstemperatur erreicht wird. Nachdem die vorgegebene Soll-Temperatur erreicht oder überschritten ist, wird die Detektionseinrichtung im Abschaltbetriebsmodus mit zeitweiser Abschaltung des Empfängers betrieben, wobei über die Regelung der Temperatur die optimale Betriebstemperatur und damit größtmögliche Empfindlichkeit der Detektionseinrichtung sichergestellt ist.

In einer vorteilhaften Ausgestaltung der Erfindung ist der Sender dazu ausgebildet, innerhalb eines Messzyklus der Detektionseinrichtung für eine Vielzahl von Abtastwinkeln in einer innerhalb des Abtastwinkelbereichs jeweils einen Sendestrahl auszusenden. Eine Auswertungseinrichtung ordnet unter Berücksichtigung aktueller Winkelangaben, bspw. Mittels eines Winkelgebers, die Empfangssignale der Fotodioden den jeweiligen Winkeln zu, so dass der Abtastwinkelbereich nacheinander gescannt wird. Der Sender umfasst vorteilhaft ein drehbar gelagertes bewegliches Abtastelement, beispielsweise einen Umlenkspiegel, zum Ausrichten der Sendestrahlen auf den jeweiligen Abtastwinkel. Der Umlenkspiegel ist dabei wenigstens von einer Anfangswinkelstellung, welche einem ersten Abtastwinkel des Abtastwinkelbereichs entspricht, in eine Endwinkelstellung, welche einem letzten Abtastwinkel des Abtastwinkelbereichs entspricht, bewegbar. Die Sendepause ist durch die Zeitdauer vorgegeben, in welcher das bewegliche Abtastelement von der Endwinkelstellung in die Anfangswinkelstellung bewegbar ist. Der Umlenkspiegel wird dabei bevorzugt rotierend betrieben. Das Abtastelement, das heißt insbesondere der Umlenkspiegel, leitet dabei auch die aus der Umgebung reflektierten Strahlen in Richtung auf den Fotodetektor um.

Eine Abtastung des Abtastwinkelbereichs in Azimutrichtung ist bereits mittels einer einzelnen Fotodiode möglich. Werden mehrere Fotodioden übereinander angeordnet, so kann mit einem geometrisch bestimmten Öffnungswinkel von beispielsweise 3,2 °eine Abtastung in Elevationsrichtung erfolgen, das heißt ein mehrzeiliges Scannen ist möglich.

Vorteilhaft sind die Abschaltmittel derart angeordnet, dass als Komponente des Empfängers ein Verstärker der optischen Detektionseinrichtung von seiner elektrischen Versorgungsspannung trennbar ist. Im Abschaltbetriebsmodus wird somit der Verstärker des Empfängers zeitweise, das heißt in Abschaltintervallen während der Sendepausen des Senders, abgeschaltet. Der Verstärker für das Empfangssignal des Fotodetektors benötigt nämlich im Vergleich zu anderen Bauteilen der Detektionseinrichtung viel elektrische Leistung, um das elektrische Empfangssignal zu verstärken und somit die gewünschte Detektionsleistung der Detektionseinrichtung beziehungsweise des Laserscanners zu erreichen. Zusätzlich oder alternativ kann auch der zumindest eine Fotodetektor bzw. Dessen wenigstens eine Fotodiode, von seiner Versorgungsspannung getrennt werden. In diesem Fall wird die Biasspannung, mit welcher der Fotodetektor elektrisch vorgespannt ist, für die Dauer des Abschaltintervalls durch ein entsprechendes Abschaltmittel elektrisch getrennt.

Weitere Merkmale der Erfindung ergeben sich aus den Ansprüchen. Ausführungsbeispiele der Erfindung sind nachstehend anhand der Zeichnung näher erläutert. Es zeigen:
- Fig. 1: eine schematische Darstellung des prinzipiellen Aufbaus eines Ausführungsbeispiels einer abtastenden optoelektronischen Detektionseinrichtung,
- Fig. 2: eine schematische Darstellung eines Kraftfahrzeugs mit einer Detektionseinrichtung gemäß einer Ausführungsform der Erfindung,
- Fig. 3: ein Blockschaltbild eines Ausführungsbeispiels der Detektionseinrichtung,
- Fig. 4: zeitliche Signalverläufe im Betrieb einer erfindungsgemäß betriebenen Detektionseinrichtung,
- Fig. 5: zeitliche Temperaturverläufe im Betrieb eines Ausführungsbeispiels einer optoelektronischen Detektionseinrichtung.

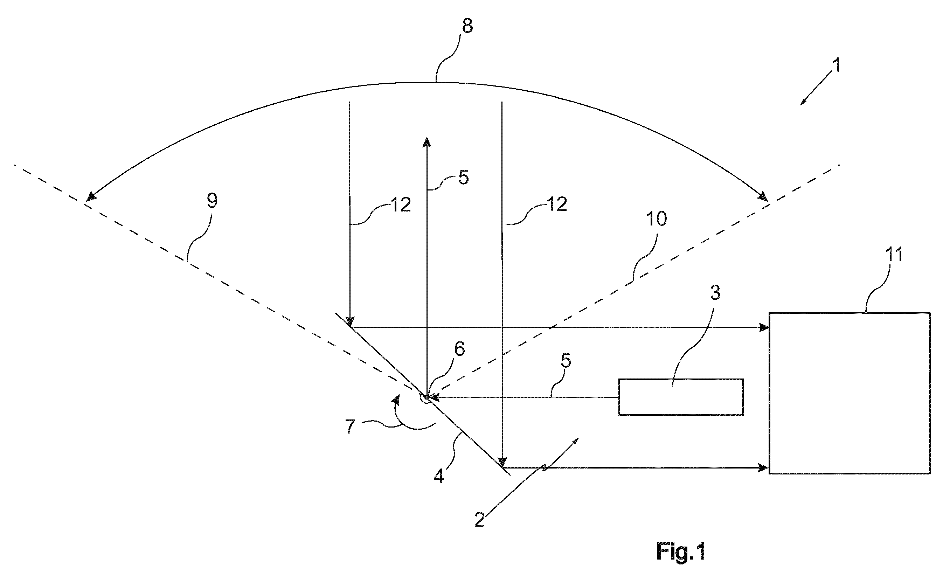

Die in Fig. 1 gezeigte optoelektronische Detektionseinrichtung weist einen optischen Sender 2 auf, welcher einen Laser 3 als optische Quelle sowie einen Umlenkspiegel 4 als bewegliches Abtastelement umfasst. Der Laser 3 erzeugt Sendestrahlen 5, welche mittels des Umlenkspiegels 4 umgelenkt werden.

Der Umlenkspiegel 4 ist um eine Drehachse 6 drehbar gelagert und wird von einer nicht dargestellten Antriebseinheit in Pfeilrichtung 7 rotierend angetrieben.

Die Detektionseinrichtung 1 stellt ein Sichtfeld zur Verfügung, welches in Azimutrichtung durch einen Abtastwinkelbereich 8 definiert ist. Der Abtastwinkelbereich 8 erstreckt sich zwischen einem ersten Abtastwinkel 9 und einem letzten Abtastwinkel 10. Die Umgebung wird dabei in Azimutrichtung derart abgetastet, dass für eine Vielzahl von Abtastwinkeln innerhalb des Abtastwinkelbereichs 8, das heißt zwischen dem ersten Abtastwinkel 9 und dem letzten Abtastwinkel 10, jeweils ein Sendestrahl 5 (Laserimpuls) ausgesendet wird.

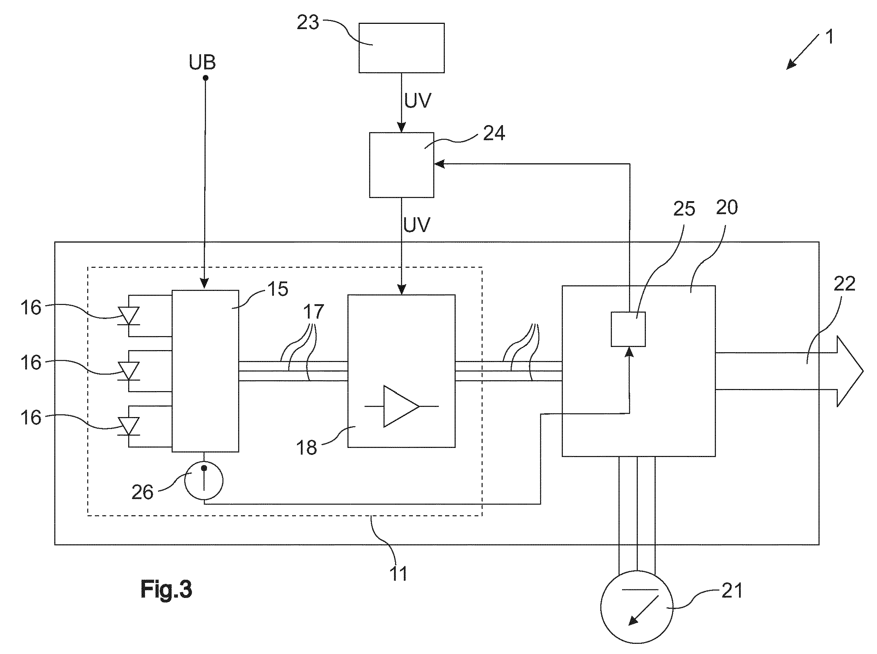

Der rotierende Umlenkspiegel 4 lenkt in Abhängigkeit von seiner jeweiligen Stellung die ausgesendeten Sendestrahlen 5 in die Umgebung, wobei ein Winkelgeber 21 (Fig. 3) die jeweilige Drehwinkelstellung des Umlenkspiegels 4 erfasst. Auf diese Weise kann jedem vorgesehenen Abtastwinkel entsprechend einer Scanfrequenz und Winkelauflösung ein Sendestrahl zugeordnet werden.

In einem alternativen Ausführungsbeispiel wird der Umlenkspiegel schrittweise bewegt, beispielsweise mittels eines Schrittmotors, wobei die Anfangswinkelstellung dem ersten Abtastwinkel 9 und die Endwinkelstellung dem letzten Abtastwinkel 10 entspricht. In jedem Messzyklus der Detektionseinrichtung wird somit der Abtastwinkelbereich 8 gescannt. Nach jedem Messzyklus, das heißt nach dem Erreichen des letzten Abtastwinkels 10, dreht der Umlenkspiegel 4 entsprechend der Pfeilrichtung 7 weiter und erreicht schließlich die Anfangswinkelstellung, wobei ein neuer Messzyklus beginnt. Die Messzyklen werden somit periodisch wiederholt, wobei die Zeitdauer jedes Messzyklus durch die Abtastfrequenz und die Winkelauflösung sowie die Größe des Abtastwinkelbereichs bestimmt ist. Nach jedem Messzyklus folgt eine Sendepause, in welcher keine Sendestrahlen 5 über den Umlenkspiegel 4 in die Umgebung gesendet werden.

Die Sendestrahlen 5 werden an Zielobjekten in der Umgebung reflektiert. Ein optischer Empfänger 11 der Detektionseinrichtung 1 empfängt die am Zielobjekt reflektierten Strahlen 12. Die reflektierten Strahlen 12 werden im gezeigten Ausführungsbeispiel von dem Umlenkspiegel 4 in Richtung des optischen Empfängers 11 umgelenkt. Alternativ kann auch ein feststehendes Umlenkelement anstelle des beweglichen Umlenkspiegels 4 zur Umlenkung der reflektierten Strahlen 12 vorgesehen sein, oder die reflektierten Strahlen fallen direkt auf den optischen Empfänger 11.

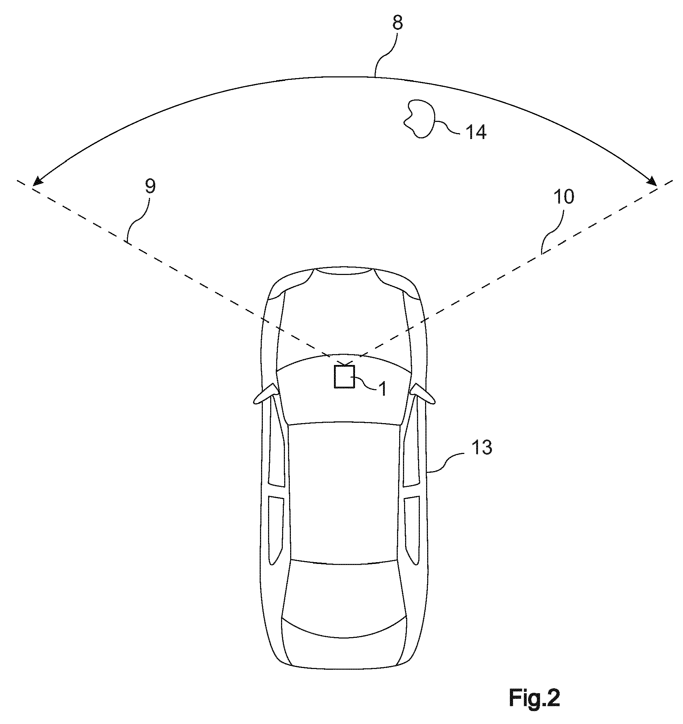

Die Detektionseinrichtung 1 ist im Ausführungsbeispiel gemäß Fig. 2 derart an einem Kraftfahrzeug 13 angeordnet, dass sie die Umgebung des Kraftfahrzeugs 13 in Fahrtrichtung erfasst. Die Detektionseinrichtung 1 kann dazu beispielsweise hinter der Windschutzscheibe oder am Kühlergrill angeordnet werden. Mittels der Detektionseinrichtung können somit Zielobjekte 14 detektiert werden, welche sich vor dem Kraftfahrzeug 13 befinden. In weiteren Ausführungsbeispielen ist die Detektionseinrichtung alternativ oder zusätzlich in seitlichen Bereichen des Kraftfahrzeugs, beispielsweise im Bereich der jeweiligen Außenspiegel, angeordnet. Auf diese Weise ist eine Überwachung der seitlichen Totwinkelbereiche möglich.

Fig. 3 zeigt ein Blockschaltbild eines Ausführungsbeispiels eines optischen Empfängers 11 für eine Detektionseinrichtung 1. Der Empfänger 11 weist einen Fotodetektor 15 auf, welcher für den Empfang reflektierter Strahlen 12 (Fig. 1) eine oder mehrere Avalanche-Fotodioden 16 aufweist. Im gezeigten Ausführungsbeispiel umfasst der Fotodetektor 15 drei Avalanche-Fotodioden 16, welche übereinander in Hochrichtung des Kraftfahrzeugs verteilt angeordnet sind. Die Avalanche-Fotodioden 16 liegen in Elevationsrichtung, das heißt senkrecht zur Azimutrichtung gemäß dem Abtastwinkelbereich 8 (Fig. 1), aufgereiht. Auf diese Weise ist ein mehrzeiliges Laserscannen möglich mit einem Öffnungswinkel in Elevationsrichtung, welcher beispielsweise 3,2 ° betragen kann.

Die Avalanche-Fotodioden 16 sind mit einer Biasspannung UB elektrisch vorgespannt und stellen jeweils ein elektrisches Empfangssignal 17 in Abhängigkeit der empfangenen Strahlen 12 bereit.

Der optische Empfänger 11 umfasst außerdem einen Verstärker 18, welcher die Empfangssignale 17 der Avalanche-Fotodioden 16 unabhängig voneinander verstärkt. Der Verstärker 18 ist dabei im gezeigten Ausführungsbeispiel ein Transimpedanzverstärker. Der Verstärker 18 gibt verstärkte Empfangssignale 19 an eine elektronische Auswertungseinrichtung 20 ab. Die Auswertungseinrichtung 20 ist mit einem Winkelgeber 21 gekoppelt und erfasst über den Winkelgeber 21 den aktuellen Abtastwinkel des optischen Senders 2 (Fig. 1). Die Auswertungseinrichtung 20 umfasst eine Elektronik und ist dazu ausgebildet, die geführten Empfangssignale 19 dem jeweiligen aktuellen Abtastwinkel zuzuordnen. Anhand der Empfangssignale 19 kann die Auswertungseinrichtung 20 Zielobjekte in der Umgebung detektieren, wobei aus einer Laufzeitermittlung die Entfernung des jeweiligen Zielobjekts ermittelt wird. Die Auswertungseinrichtung 20 gibt ein Detektionsergebnis 22 ab, welches in einem oder mehreren Fahrerassistenzsystemen beziehungsweise dessen Steuergeräten berücksichtigt wird.

Eine Spannungsversorgungseinrichtung 23 stellt eine elektrische Versorgungsspannung UV für den Verstärker 18 bereit. Die Versorgungsspannung UV kann im Bordnetz des Kraftfahrzeugs abgegriffen werden.

Die Detektionseinrichtung 1 umfasst außerdem ein Abschaltmittel 24, welches derart ausgebildet ist, dass zumindest eine Komponente des Empfängers 12 von der Versorgungsspannung UV zeitweise elektrisch trennbar ist. Das Abschaltmittel ist vorzugsweise ein Schalter, beispielsweise ein Highside-Schalter, welcher in dem Schaltungszweig der Spannungsversorgungseinrichtung 23 angeordnet ist. Im gezeigten Ausführungsbeispiel ist die mittels des Abschaltmittels 24 von der Versorgungsspannung UV zeitweise elektrisch trennbare Komponente des Empfängers 12 der Verstärker 18. Das Abschaltmittel 24 ist daher in dem Schaltungszweig zwischen der Spannungsversorgungseinrichtung 23 und dem Verstärker 18 angeordnet.

Das Abschaltmittel 24 wird von einer Steuereinrichtung 25 angesteuert, welche im gezeigten Ausführungsbeispiel in die Auswertungseinrichtung 20 integriert ist. Die Steuereinrichtung 25 ist dabei derart mit der Auswertungseinrichtung 20 gekoppelt, dass die Steuereinrichtung das Vorliegen eines Messzyklus oder einer Sendepause unterscheiden kann. Dies ist durch eine entsprechende Information der Auswertungseinrichtung oder direkte Berücksichtigung der Information des Winkelgebers 21.

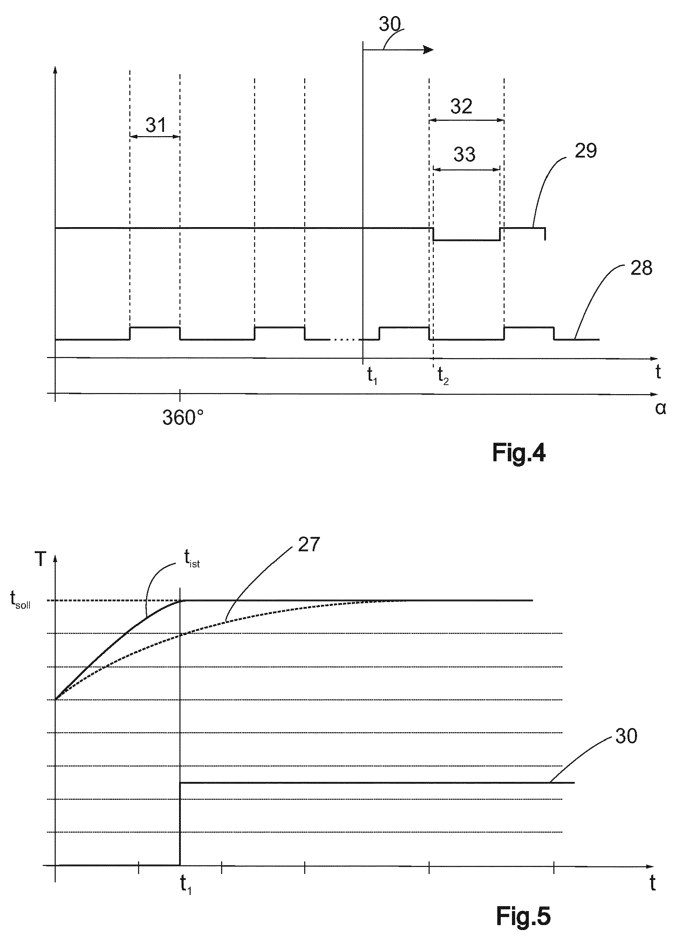

Die Steuereinrichtung 25 wirkt auf das Abschaltmittel 24 unter Berücksichtigung der Ist-Temperatur einer Komponente der Detektionseinrichtung 1, nämlich des Fotodetektors 15, und einer vorgegebenen Soll-Temperatur. Zur Erfassung der aktuellen Ist-Temperatur des Fotodetektors 15 ist eine entsprechende Einrichtung vorgesehen, im gezeigten Ausführungsbeispiel ein dem Fotodetektor 15 zugeordneter Temperatursensor 26. Die gemessene Ist-Temperatur 27 wird der Steuereinrichtung vorgegeben. Die Soll-Temperatur wird aus einem nicht dargestellten Speicherelement bereitgestellt. Die Steuereinrichtung 25 ist derart konfiguriert, dass ein Abschaltbetriebsmodus, in welchem die Steuereinrichtung 25 über das Abschaltmittel 24 den Verstärker 18 während der Sendepausen des optischen Senders 2 zeitweise von der elektrischen Versorgungsspannung trennt, eingeschaltet wird, sobald die Ist-Temperatur die vorgegebene Soll-Temperatur erreicht oder überschreitet. Ein Verfahren zum Betrieb der Detektionseinrichtung 1 ist nachstehend anhand der Figuren 4 und 5 näher erläutert.

Fig. 4 zeigt zwei Betriebsverläufe 28, 30 sowohl über der Zeit t als auch über dem aktuellen Abtastwinkel α der Detektionseinrichtung 1. Jeder Betriebsverlauf nimmt dabei entweder einen eingeschalteten Betriebszustand oder einen abgeschalteten Betriebszustand ein. Dabei ist ein Verlauf 28 dargestellt, welcher den Betrieb des optischen Senders 2 symbolisiert und ein Verlauf 29 den Betrieb des Empfängers 11 symbolisiert.

Fig. 5 zeigt in einem Schaubild der Temperatur T über der Zeit t einen Verlauf der Ist-Temperatur Tᵢₛₜ bei einer Ansteuerung des Abschaltmittels unter Berücksichtigung der Ist-Temperatur. Außerdem ist ein Verlauf 27 der Ist-Temperatur bei einer Steuerung der Abschaltmittel ohne Berücksichtigung der Ist-Temperatur dargestellt. Ferner ist in Fig. 5 ein Verlauf zur Aktivierung des Abschaltbetriebsmodus 30 angegeben.

Wie in dem Verlauf 28 des Senderbetriebs in Fig. 4 erkennbar ist, wird der optische Sender der Detektionseinrichtung während der Messzyklen 31 eingeschaltet. Der optische Sender sendet innerhalb der Messzyklen und seines Abtastwinkelbereichs jeweils einzelne Sendestrahlen für jeden Abtastwinkel aus. Nach jedem Messzyklus 31, das heißt nach Verlassen des letzten Abtastwinkels des Abtastwinkelbereichs, erfolgt jeweils eine Sendepause 32, in welcher der optische Sender abgeschaltet ist, beziehungsweise keine Sendestrahlen abgegeben werden. Die Sendepausen 32 sind dabei jeweils durch eine Zeitdauer bestimmt, während welcher der Umlenkspiegel 4 (Fig. 1) von der Endwinkelstellung in die Anfangswinkelstellung bewegt wird. Die Folge von Messzyklus 31 und Sendepause 32 entspricht bei einem umlaufenden Umlenkspiegel 4 (Fig. 1) einem Abtastwinkel von 360°und wird nacheinander wiederholt, das heißt auf jeden Messzyklus 31 folgt eine Sendepause 32.

In einer Startphase, das heißt nach einer Inbetriebnahme der Detektionseinrichtung bzw. Des Kraftfahrzeugs, ist die aktuelle Ist-Temperatur Tᵢₛₜ geringer als die vorgegebene Soll-Temperatur Tₛₒₗₗ. Während der Startphase wird der Empfänger der Detektionseinrichtung durchgehend, das heißt nicht nur während der Messzyklen, sondern auch während der Sendepausen, mit Energie versorgt. Im durchgehenden Betrieb des Empfängers erzeugen dessen elektrische Verbraucher durchgehend Wärme und erwärmen den Fotodetektor, wobei die Fotodioden in kurzer Zeit auf Ihre optimale Betriebtemperatur mit höchster Empfindlichkeit erwärmt werden. Eine Abschaltung des Empfängers während der Sendepausen erfolgt dabei in Abhängigkeit der Ist-Temperatur Tᵢₛₜ. Die Soll-Temperatur wird durch den durchgehenden Betrieb des Empfängers deutlich rascher erreicht, als bei einem sofortigen Abschaltbetrieb mit Empfängerabschaltung während der Sendepausen gemäß dem Verlauf 27.

Sobald die Ist-Temperatur Tᵢₛₜ zum Zeitpunkt t₁ (Fig. 5) die vorgegebene Soll-Temperatur Tₛₒₗₗ erreicht oder überschreitet, wird der Abschaltbetriebsmodus 30 eingeschaltet. Im Abschaltbetriebsmodus 30 aktiviert die Steuereinrichtung das Abschaltmittel und trennt damit wenigstens eine Komponente des Empfängers, insbesondere den Verstärker, zeitlich begrenzt elektrisch von der Versorgungsspannung. Der Empfänger wird dadurch, wie in dem Verlauf 29 des Empfängerbetriebs in Fig. 4 dargestellt ist, für Abschaltintervalle 33 während der Sendepausen 32 abgeschaltet.

Die Dauer des Abschaltintervalls 33 ist in einem Ausführungsbeispiel der Erfindung fest vorgegeben, wobei die Steuereinrichtung während der Startphase der Detektionseinrichtung beziehungsweise des Kraftfahrzeugs mit der Detektionseinrichtung unter Berücksichtigung der Ist-Temperatur auf das Abschaltmittel wirkt. Im Abschaltbetriebsmodus 30 erfolgt jeweils eine Abschaltung des Empfängers für das vorgegebene Abschaltintervall 33. Alternativ oder zusätzlich kann der Anfangszeitpunkt t₂ des Abschaltintervalls 33 vorgegeben sein.

In einem besonders bevorzugten Ausführungsbeispiel der Erfindung ist die Steuereinrichtung 25 (Fig. 3) derart ausgebildet, dass die Dauer des Abschaltintervalls 33 während der Sendepausen 32 einstellbar ist. Dabei wird im Abschaltbetriebsmodus die Dauer des Abschaltintervalls 33 in Abhängigkeit der Differenz zwischen Ist-Temperatur Tᵢₛₜ, das heißt der eingegebenen Messwerte, und der vorgegebenen Soll-Temperatur Tₛₒₗₗ eingestellt. Daher kann die Ist-Temperatur Tᵢₛₜ mit der Dauer des Abschaltintervalls 33 als Stellgröße gesteuert oder geregelt werden, das heißt die Ist-Temperatur Tᵢₛₜ der Soll-Temperatur Tₛₒₗₗ durch Stelleingriffe über die Einstellung der Dauer des Abschaltintervalls 33, nachgeführt werden.

Die Steuereinrichtung 25 (Fig. 3) ist somit in einem Regelkreis zur Regelung der Temperatur des Fotodetektors 15 angeordnet, wobei die gemessene Temperatur, das heißt die Ist-Temperatur Tᵢₛₜ in dem Regelkreis die Führungsgröße und die Dauer des Abschaltintervalls 33 die Stellgröße sind. Liegt die Ist-Temperatur Tᵢₛₜ unter der Soll-Temperatur Ts_{oll,} so kann die Dauer des Abschaltintervalls 33 reduziert werden, wodurch der Empfänger 11 über den jeweiligen Messzyklus 31 hinaus länger während der Sendepausen 32 eingeschaltet bleibt. Liegt die Ist-Temperatur Tᵢₛₜ insbesondere in der Startphase bei noch kalten Fotodioden deutlich unter der vorgegebenen Soll-Temperatur Tₛₒₗₗ, so können die Abschaltintervalle 33 so reduziert werden, dass der Empfänger praktisch kontinuierlich eingeschaltet bleibt. Dabei kann neben der vorgegebenen Soll-Temperatur, welche die optimale Betriebstemperatur des Fotodetektors ist, weitere Soll-Temperaturen vorgegeben werden, um bei geringen Temperaturen einen kontinuierlichen Betrieb des Empfängers oder bestimmte Betriebszeiten des Empfängers einzustellen.

## Patentansprüche

1. Abtastende optoelektronische Detektionseinrichtung, insbesondere Laserscanner, mit
- einem optischen Sender (2) zum Aussenden elektromagnetischer Strahlen (5) innerhalb eines Abtastwinkelbereichs (8) in eine Umgebung der Detektionseinrichtung (1), welcher derart ausgebildet ist, dass Sendestrahlen (5) innerhalb eines Messzyklus (31) der Detektionseinrichtung (1) sendbar sind und nach jedem Messzyklus (31) jeweils eine Sendepause (32) folgt,
- einem optischen Empfänger (11), der zumindest einen Fotodetektor (15) zum Empfangen von reflektierten Strahlen (12) aufweist,
- einer Spannungsversorgungseinrichtung (23) zum Bereitstellen einer elektrischen Versorgungsspannung (UV),
- einem Abschaltmittel (24), welches derart ausgebildet ist, dass zumindest eine Komponente des Empfängers (11) von der Versorgungsspannung (UV) in einem Abschaltbetriebsmodus (30) für wenigstens ein zeitliches Abschaltintervall (33) nach jedem Messzyklus (31) von der Versorgungsspannung (UV) elektrisch trennbar ist,
**gekennzeichnet dadurch dass** die Detektionseinrichtung weiter ausgestattet ist mit
- einer auf das Abschaltmittel (24) unter Berücksichtigung der Ist-Temperatur (Tᵢₛₜ) einer Komponente einer Detektionseinrichtung (1) wirkenden Steuereinrichtung (25).

2. Detektionseinrichtung nach Anspruch 1,
**dadurch gekennzeichnet, dass**
der Sender (2) dazu ausgebildet ist, innerhalb des Messzyklus (31) der Detektionseinrichtung (1) für eine Vielzahl von Abtastwinkeln (α) innerhalb des Abtastwinkelbereichs (8) jeweils einen Sendestrahl (5) auszusenden.

3. Detektionseinrichtung nach Anspruch 1 oder 2,
**gekennzeichnet durch** eine derartige Konfiguration der Steuereinrichtung (25), dass der Abschaltbetriebsmodus (30) eingeschaltet wird, sobald die Ist-Temperatur (Tᵢₛₜ) eine vorgegebene Soll-Temperatur (Tₛₒₗₗ) erreicht oder überschreitet.

4. Detektionseinrichtung nach einem der Ansprüche 1 bis 3,
**dadurch gekennzeichnet,**
**dass** die von der Steuereinrichtung (25) berücksichtigte Ist-Temperatur (Tᵢₛₜ) die Temperatur des wenigstens einen Fotodetektors (15) ist.

5. Detektionseinrichtung nach einem der Ansprüche 1 bis 4,
**dadurch gekennzeichnet, dass**
der Steuereinrichtung (25) ein Temperatursensor (26) zur Erfassung der Ist-Temperatur (Tᵢₛₜ) einer Komponente der Detektionseinrichtung (1) zugeordnet ist.

6. Detektionseinrichtung nach Anspruch 5,
**dadurch gekennzeichnet, dass**
der Sender (2) ein drehbar gelagertes bewegliches Abtastelement, insbesondere einen Umlenkspiegel (4), zum Ausrichten der Sendestrahlen (5) aufweist, welches von einer Anfangswinkelstellung, welche einem ersten Abtastwinkel (9) des Abtastwinkelbereichs (8) entspricht, in eine Endwinkelstellung, welche einem letzten Abtastwinkel (10) des Abtastwinkelbereichs (8) entspricht, bewegbar ist, wobei die jeweilige Sendepause (32) durch eine Zeitdauer vorgegeben ist, während welcher das bewegliche Abtastelement von der Endwinkelstellung in die Anfangswinkelstellung bewegbar ist.

7. Detektionseinrichtung nach einem der vorhergehenden Ansprüche,
**dadurch gekennzeichnet, dass**
die Steuereinrichtung (25) derart ausgebildet ist, dass die Dauer des Abschaltintervalls (33) während der Sendepausen (32) einstellbar ist.

8. Detektionseinrichtung nach einem der vorhergehenden Ansprüche,
**dadurch gekennzeichnet, dass**
die Steuereinrichtung (25) in einem Regelkreis zur Regelung der Temperatur angeordnet ist, wobei die gemessene Ist-Temperatur (Tᵢₛₜ) der Komponente der Detektionseinrichtung (1) in dem Regelkreis die Führungsgröße und die Dauer des Abschaltintervalls (33) die Stellgröße sind.

9. Detektionseinrichtung nach einem der vorhergehenden Ansprüche,
**dadurch gekennzeichnet, dass**
die mittels des Abschaltmittels (24) von der Versorgungsspannung (UV) zeitweise elektrisch trennbare Komponente des Empfängers (11) ein Verstärker (18) zur Verstärkung des Empfangssignals (17) des Fotodetektors (15) ist.

10. Verfahren zum Betreiben einer abtastenden optoelektronischen Detektionseinrichtung nach einem der vorhergehenden Ansprüche, wobei
- mittels eines optischen Senders (2) elektromagnetische Strahlen (5) innerhalb jedes einzelnen Messzyklus (31) der Detektionseinrichtung (1) für eine Vielzahl von Abtastwinkeln α innerhalb eines Abtastwinkelbereichs (8) in die Umgebung der Detektionseinrichtung (1) ausgesendet werden, wobei nach jedem Messzyklus (31) eine Sendepause (32) bestimmter Zeitdauer erfolgt,
- mittels zumindest eines Fotodetektors (15) des optischen Empfängers (11) in der Umgebung reflektierte Strahlen (12) empfangen und ein elektrisches Empfangssignal (17) abhängig von den reflektierten Strahlen (12) bereitgestellt wird,
- mittels einer Spannungsversorgungseinrichtung (23) eine elektrische Versorgungsspannung (UV) für den Empfänger (11) bereitgestellt wird,
- ein Abschaltmittel (24) in einem Abschaltbetriebsmodus (30) der Detektionseinrichtung (1) zumindest eine Komponente des Empfängers (11) von der Versorgungsspannung (UV) zeitweise elektrisch trennt,
**gekennzeichnet dadurch dass**
- eine Steuereinrichtung (25) unter Berücksichtigung der Ist-Temperatur (Tᵢₛₜ) einer Komponente der Detektionseinrichtung (1) auf das Abschaltmittel (24) wirkt.

11. Verfahren nach Anspruch 10,
**dadurch gekennzeichnet, dass**
in dem Abschaltbetriebsmodus (30) die zumindest eine Komponente des Empfängers (11) für wenigstens ein Abschaltintervall (33) während der Sendepause (32) von der Versorgungsspannung UV elektrisch getrennt wird.

12. Verfahren nach Anspruch 11,
**dadurch gekennzeichnet, dass**
die Detektionseinrichtung (1) im Abschaltbetriebsmodus (30) betrieben wird, sobald die Ist-Temperatur (Tᵢₛₜ) eine vorgegebene Soll-Temperatur (Tₛₒₗₗ) erreicht oder überschreitet.

13. Verfahren nach einem der Ansprüche 10 bis 12,
**dadurch gekennzeichnet, dass**
die Ist-Temperatur (Tᵢₛₜ) des Fotodetektors (15) oder wenigstens einer Fotodiode (16) des Fotodetektors (15) erfasst wird.

14. Verfahren nach einem der Ansprüche 10 bis 13,
**dadurch gekennzeichnet, dass**
im Abschaltbetriebsmodus (30) die Dauer und/oder ein Anfangszeitpunkt (t₂ )des Abschaltintervalls (33) vorgegeben ist.

15. Verfahren nach einem der Ansprüche 10 bis 14,
**dadurch gekennzeichnet, dass**
im Abschaltbetriebsmodus (30) die Dauer des Abschaltintervalls (33) variabel eingestellt wird, wobei die Ist-Temperatur (Tᵢₛₜ) mit der Dauer des Abschaltintervalls (33) als Stellgröße gesteuert oder geregelt wird.

16. Kraftfahrzeug (13) mit einer Detektionseinrichtung (1) nach einem der Ansprüche 1 bis 9.

## Claims

1. Scanning optoelectronic detection device, in particular laser scanner, comprising
- an optical transmitter (2) for emitting electromagnetic beams (5) within a scanning angle range (8) into an environment of the detection device (1), said optical transmitter being designed in such a way that transmission beams (5) are transmittable within a measurement cycle (31) of the detection device (1) and a transmission pause (32) respectively follows after each measurement cycle (31),
- an optical receiver (11) having at least one photodetector (15) for receiving reflected beams (12),
- a voltage supply device (23) for providing an electrical supply voltage (UV),
- a switch-off means (24) designed in such a way that at least one component of the receiver (11) is electrically isolatable from the supply voltage (UV) in a switch-off operating mode (30) for at least one temporal switch-off interval (33) after each measurement cycle (31) from the supply voltage (UV),
**characterized in that** the detection device is further equipped with
- a control device (25) acting on the switch-off means (24) while taking account of the actual temperature (T_{actual}) of a component of a detection device (1).

2. Detection device according to Claim 1,
**characterized in that**
the transmitter (2) is designed to respectively emit a transmission beam (5) within the measurement cycle (31) of the detection device (1) for a multiplicity of scanning angles (α) within the scanning angle range (8).

3. Detection device according to Claim 1 or 2,
**characterized by** such a configuration of the control device (25) that the switch-off operating mode (30) is switched on as soon as the actual temperature (T_{actual}) reaches or exceeds a predefined setpoint temperature (Tₛₑₜₚₒᵢₙₜ).

4. Detection device according to any of Claims 1 to 3,
**characterized**
**in that** the actual temperature (T_{actual}) taken into account by the control device (25) is the temperature of the at least one photodetector (15).

5. Detection device according to any of Claims 1 to 4,
**characterized in that**
the control device (25) is assigned a temperature sensor (26) for detecting the actual temperature (T_{actual}) of a component of the detection device (1).

6. Detection device according to Claim 5,
**characterized in that**
the transmitter (2) has a rotatably mounted movable scanning element, in particular a deflection mirror (4), for aligning the transmission beams (5), which scanning element is movable from a start angle position, corresponding to a first scanning angle (9) of the scanning angle range (8), into an end angle position, corresponding to a last scanning angle (10) of the scanning angle range (8), wherein the respective transmission pause (32) is predefined by a time duration during which the movable scanning element is movable from the end angle position into the start angle position.

7. Detection device according to any of the preceding claims,
**characterized in that**
the control device (25) is designed in such a way that the duration of the switch-off interval (33) during the transmission pauses (32) is adjustable.

8. Detection device according to any of the preceding claims,
**characterized in that**
the control device (25) is arranged in a control loop for closed-loop control of the temperature, wherein the measured actual temperature (T_{actual}) of the component of the detection device (1) in the control loop is the reference variable, and the duration of the switch-off interval (33) is the manipulated variable.

9. Detection device according to any of the preceding claims,
**characterized in that**
the component of the receiver (11) that is electrically isolatable from the supply voltage (UV) at times by means of the switch-off means (24) is an amplifier (18) for amplifying the reception signal (17) of the photodetector (15).

10. Method for operating a scanning optoelectronic detection device according to any of the preceding claims, wherein
- by means of an optical transmitter (2) electromagnetic beams (5) are emitted within each individual measurement cycle (31) of the detection device (1) for a multiplicity of scanning angles a within a scanning angle range (8) into the environment of the detection device (1), wherein a transmission pause (32) of specific time duration ensues after each measurement cycle (31),
- by means of at least one photodetector (15) of the optical receiver (11), beams (12) reflected in the environment are received and an electrical reception signal (17) is provided depending on the reflected beams (12),
- by means of a voltage supply device (23) an electrical supply voltage (UV) is provided for the receiver (11),
- a switch-off means (24) in a switch-off operating mode (30) of the detection device (1) electrically isolates at least one component of the receiver (11) from the supply voltage (UV) at times,
**characterized in that**
- a control device (25) acts on the switch-off means (24) taking account of the actual temperature (T_{actual}) of a component of the detection device (1).

11. Method according to Claim 10,
**characterized in that**
in the switch-off operating mode (30) the at least one component of the receiver (11) is electrically isolated from the supply voltage (UV) for at least one switch-off interval (33) during the transmission pause (32).

12. Method according to Claim 11,
**characterized in that**
the detection device (1) is operated in the switch-off operating mode (30) as soon as the actual temperature (T_{actual}) reaches or exceeds a predefined setpoint temperature (Tₛₑₜₚₒᵢₙₜ).

13. Method according to any of Claims 10 to 12,
**characterized in that**
the actual temperature (T_{actual}) of the photodetector (15) or of at least one photodiode (16) of the photodetector (15) is detected.

14. Method according to any of Claims 10 to 13,
**characterized in that**
the duration and/or a start instant (t₂) of the switch-off interval (33) are/is predefined in the switch-off operating mode (30).

15. Method according to any of Claims 10 to 14,
**characterized in that**
the duration of the switch-off interval (33) is set in a variable fashion in the switch-off operating mode (30), wherein the actual temperature (T_{actual}) is subjected to open-loop control or closed-loop control with the duration of the switch-off interval (33) as a manipulated variable.

16. Motor vehicle (13) comprising a detection device (1) according to any of Claims 1 to 9.

## Revendications

1. Dispositif de détection optoélectronique à balayage, notamment dispositif de balayage à laser, comportant
- un émetteur optique (2) destiné à émettre des faisceaux électromagnétiques (5) à l'intérieur d'une région angulaire de balayage (8) dans un environnement du dispositif de détection (1), qui est conçu de manière à ce que des faisceaux d'émission (5) puissent être émis au cours d'un cycle de mesure (31) du dispositif de détection (1) et à ce qu'une interruption de l'émission (32) fasse respectivement suite à chaque cycle de mesure (31),
- un récepteur optique (11) comportant un photodétecteur (15) destiné à recevoir des faisceaux réfléchis (12),
- un dispositif d'alimentation en tension (23) destiné à fournir une tension d'alimentation électrique (UV),
- un moyen de coupure (24) qui est conçu de manière à ce qu'au moins un composant du récepteur (11) puisse être électriquement séparé de la tension d'alimentation (UV) dans un mode de fonctionnement de coupure (30) pendant au moins un intervalle de temps de coupure (33) faisant suite à chaque cycle de mesure (31) de la tension d'alimentation (UV),
**caractérisé en ce que** le dispositif de détection comporte en outre
- un dispositif de commande (25) agissant sur le moyen de coupure (24) en tenant compte de la température instantanée (Tᵢₛₜ) d'un composant d'un dispositif de détection (1).

2. Dispositif de détection selon la revendication 1,
**caractérisé en ce que** l'émetteur (2) est conçu pour émettre un faisceau d'émission (5) respectif au cours du cycle de mesure (31) du dispositif de détection (1) pour une pluralité d'angles de balayage (α) à l'intérieur de la région angulaire de balayage (8).

3. Dispositif de détection selon la revendication 1 ou 2,
**caractérisé par** une configuration du dispositif de commande (25) telle que le mode de fonctionnement de coupure (30) est mis en oeuvre dès que la température instantanée (Tᵢₛₜ) atteint ou dépasse une température nominale (Tₛₒₗₗ) prédéterminée.

4. Dispositif de détection selon l'une quelconque des revendications 1 à 3,
**caractérisé en ce que** la température instantanée (Tᵢₛₜ) prise en compte par le dispositif de commande (25) est la température de l'au moins un photodétecteur (15).

5. Dispositif de détection selon l'une quelconque des revendications 1 à 4,
**caractérisé en ce qu'**un capteur de température (26) destiné à détecter la température instantanée (Tᵢₛₜ) d'un composant du dispositif de détection (1) est associé au dispositif de commande (25).

6. Dispositif de détection selon la revendication 5,
**caractérisé en ce que** l'émetteur (2) comporte un élément de balayage mobile monté de manière à pouvoir être mis en rotation, notamment un miroir de déviation (4), destiné à orienter les faisceaux d'émission (5), qui est mobile depuis une position angulaire de départ qui correspond à un premier angle de balayage (9) de la région angulaire de balayage (8), à une position angulaire finale qui correspond à un dernier angle de balayage (10) de la région angulaire de balayage (8), dans lequel l'interruption de l'émission (32) respective est prédéterminée comme étant une période de temps pendant laquelle l'élément de balayage mobile peut être déplacé de la position angulaire finale à la position angulaire de départ.

7. Dispositif de détection selon l'une quelconque des revendications précédentes,
**caractérisé en ce que** le dispositif de commande (25) est conçu de manière à ce que la durée de l'intervalle de coupure (33) puisse être introduite pendant les interruptions de l'émission (32).

8. Dispositif de détection selon l'une quelconque des revendications précédentes,
**caractérisé en ce que** le dispositif de commande (25) est disposé dans une boucle de régulation destinée à réguler la température, dans lequel la température instantanée (Tᵢₛₜ) mesurée du composant du dispositif de détection (1) dans la boucle de régulation est la grandeur de référence et la durée de l'intervalle de coupure (33) est la grandeur de réglage.

9. Dispositif de détection selon l'une quelconque des revendications précédentes,
**caractérisé en ce que** le composant du récepteur (11) pouvant être électriquement séparé par instants de la tension d'alimentation (UV) à l'aide du moyen de coupure (24) est un amplificateur (18) destiné à amplifier le signal de réception (17) du photodétecteur (15).

10. Procédé de mise en fonctionnement d'un dispositif de détection optoélectronique à balayage selon l'une quelconque des revendications précédentes, dans lequel
- des faisceaux électromagnétiques (5) sont émis au moyen d'un émetteur optique (2) au cours de chaque cycle de mesure individuel (31) du dispositif de détection (1) pour une pluralité d'angles de balayage α à l'intérieur d'une région angulaire de balayage (8) dans l'environnement du dispositif de détection (1), dans lequel une interruption de l'émission (32) de durée déterminée fait suite à chaque cycle de mesure (31),
- des faisceaux (12) réfléchis dans l'environnement sont reçu au moyen d'au moins un photodétecteur (15) du récepteur optique (11) et un signal de réception électrique (17) est délivré en fonction des faisceaux réfléchis (12),
- une tension d'alimentation électrique (UV) est délivrée au récepteur (11) au moyen d'un dispositif d'alimentation en tension (23),
- un moyen de coupure (24), dans un mode de fonctionnement de coupure (30) du dispositif de détection (1), sépare électriquement par instants un composant du récepteur (11) de la tension d'alimentation (UV),
**caractérisé en ce que**
- un dispositif de commande (25) agit sur le moyen de coupure (24) en tenant compte de la température instantanée (Tᵢₛₜ) d'un composant du dispositif de détection (1).

11. Procédé selon la revendication 10,
**caractérisé en ce que**, dans le mode de fonctionnement de coupure (30), l'au moins un composant du récepteur (11) est électriquement séparé de la tension d'alimentation (UV) au cours d'au moins un intervalle de coupure (33) pendant l'interruption de l'émission (32).

12. Procédé selon la revendication 11,
**caractérisé en ce que** le dispositif de détection (1) est mis en fonctionnement dans le mode de fonctionnement de coupure (30) dès que la température instantanée (Tᵢₛₜ) atteint ou dépasse une température nominale (Tₛₒₗₗ) prédéterminée.

13. Procédé selon l'une quelconque des revendications 10 à 12,
**caractérisé en ce que** la température instantanée (Tᵢₛₜ) du photodétecteur (15) ou d'au moins une photodiode (16) du photodétecteur (15) est détectée.

14. Procédé selon l'une quelconque des revendications 10 à 13,
**caractérisé en ce que**, dans le mode de fonctionnement de coupure (30), la durée et/ou un instant de début (t₂) de l'intervalle de coupure (33) est prédéterminé.

15. Procédé selon l'une quelconque des revendications 10 à 14,
**caractérisé en ce que**, dans le mode de fonctionnement de coupure (30), la durée de l'intervalle de coupure (33) est réglé de manière variable, dans lequel la température instantanée (Tᵢₛₜ) est commandée ou est régulée au moyen de la durée de l'intervalle de coupure (33) en tant que grandeur de réglage.

16. Véhicule automobile (13) doté d'un dispositif de détection (1) selon l'une quelconque des revendications 1 à 9.
